# EUROPÄISCHE PATENTSCHRIFT

(11) **EP 3 268 152 B1**
(45) Veröffentlichungstag und Bekanntmachung des Hinweises auf die Patenterteilung: **27.08.2025**
(21) Anmeldenummer: 16712257.1
(22) Anmeldetag: 10.03.2016
(51) Int. Cl.: B29C 67/00, C22C 5/00, B33Y 10/00, B33Y 30/00, C22C 5/02, C22C 5/04, B22F 10/28, B22F 10/366, B33Y 50/02, B22F 12/49, C22C 5/06, B29C 64/153

(54) **VERFAHREN UND VORRICHTUNG ZUM HERSTELLEN EINES DREIDIMENSIONALEN OBJEKTES MIT VERBESSERTER OBERFLÄCHENGÜTE**
PROCESS AND APPARATUS FOR THE ADDITIVE MANUFACTURE OF A 3 DIMENSIONAL PRODUCT WITH IMPROVED SURFACE QUALITY.
PROCESSUS ET APPAREILLAGE POUR LA FABRICATION ADDITIVE D'UN PRODUIT À 3 DIMENSION PRÉSENTANT UNE QUALITÉ DE SURFACE AMÉLIORÉE.

(30) Priorität: 13.03.2015 DE 102015204630
(43) Veröffentlichungstag der Anmeldung: 17.01.2018
(73) Patentinhaber: EOS GmbH Electro Optical Systems, 82152 Krailling (DE)
(72) Erfinder: HOFERER, Thomas, 81243 München (DE)
(74) Vertreter: Prüfer & Partner mbB Patentanwälte · Rechtsanwälte
(86) Internationale Anmeldenummer: PCT/EP2016/055203
(87) Internationale Veröffentlichungsnummer: WO 2016/146493

(56) Entgegenhaltungen:
- WO-A1-2015/000854
- DE-A1- 10 208 150
- US-A1- 2006 119 012
- US-A1- 2007 035 069
- US-A1- 2014 348 692
- US-B1- 6 215 093

## Beschreibung

Die Erfindung betrifft ein Verfahren und eine Vorrichtung zur Herstellung mindestens eines dreidimensionalen Objekts mittels schichtweiser Verfestigung eines pulverförmigen Aufbaumaterials durch elektromagnetische Strahlung oder Teilchenstrahlung. Insbesondere ist die Erfindung auf ein Verfahren und eine Vorrichtung gerichtet, bei denen während der schichtweisen Verfestigung ein Oberflächenbereich mehrmals bestrahlt wird.

Ein wesentliches Kriterium für die Einsetzbarkeit eines generativen Schichtbauverfahrens bei der Herstellung von Produkten ist die Oberflächenqualität, die mittels des generativen Schichtbauverfahrens erzielbar ist. Unerwünschte Oberflächenrauigkeiten können unter anderem dadurch hervorgerufen werden, dass sich im Zuge des Herstellungsvorgangs eines Objekts unverfestigtes Pulver so stark mit der Oberfläche des herzustellenden Objekts verbindet, dass eine aufwändige mechanische Nachbearbeitung notwendig ist, um eine glatte Oberfläche zu erzielen.

Die deutsche Offenlegungsschrift DE 100 65 960 A1 beschreibt ein Vorgehen, um den Aufwand bei der mechanischen Nachbearbeitung der Oberflächen zu verringern. In der Druckschrift wird vorgeschlagen, Randbereiche des herzustellenden Werkstücks wiederholt zu bestrahlen, wobei zunächst ein Strahl hoher Energiedichte am Rand eines Objektquerschnitts des herzustellenden Werkstücks entlanggeführt wird und nachfolgend eine zweite Bestrahlung des Randes mit geringerer Energiedichte durchgeführt wird. Trotz dieser Maßnahmen kann jedoch nicht auf ein aufwändiges mechanisches Polieren der Oberflächen verzichtet werden. Darüber hinaus bietet DE 100 65 960 A1 keine Lösung für Oberflächenrauigkeiten an Boden- und Deckflächen des herzustellenden Werkstücks an. DE 102 08 150 A1 offenbart, dass der Konturbereich vor dem inneren Teil des Objekts konstruiert wird, das durch additive Fertigung im Laserbett hergestellt wird. DE 102 08 150 A1 offenbart, dass jede Spur in jedem Bereich zweimal bestrahlt wird.

Es ist daher eine Aufgabe der vorliegenden Erfindung, eine Vorrichtung und ein Verfahren anzugeben, mittels derer verbesserte Objekte durch ein generatives Schichtbauverfahren hergestellt werden können. Eine solche Verbesserung wird insbesondere bevorzugt in einer Verbesserung der Oberflächeneigenschaften gesehen, d.h. in der Verbesserung der Annäherung der Oberfläche eines gefertigten Objekts an Zielvorgaben wie niedrige Porosität und/oder Glanzeigenschaften. Zielvorgabe ist es daher vor allem, die Notwendigkeit mechanischer Nachbearbeitung zur Erzielung einer glatten Oberfläche drastisch zu reduzieren.

Die Aufgabe wird gelöst durch ein Verfahren nach Anspruch 1 und eine Vorrichtung nach Anspruch 13 sowie ein Computerprogramm nach Anspruch 14. Weiterbildungen der Erfindung sind jeweils in den Unteransprüchen angegeben. Dabei können erfindungsgemäße Vorrichtungen auch durch die in den Unteransprüchen zu den Verfahren angeführten Merkmale weitergebildet sein.

Ein erfindungsgemäßes Verfahren zur Herstellung mindestens eines dreidimensionalen Objekts mittels schichtweiser Verfestigung eines pulverförmigen Aufbaumaterials durch elektromagnetische Strahlung oder Teilchenstrahlung enthält die folgenden Schritte: einen Schritt des Aufbringens einer Schicht des pulverförmigen Aufbaumaterials auf eine Bauunterlage oder eine bereits zuvor aufgetragene und selektiv verfestigte Schicht des Aufbaumaterials, einen Schritt des selektiven Verfestigens der aufgetragenen Schicht mittels elektromagnetischer Strahlung oder Teilchenstrahlung, wobei alle Stellen in der aufgebrachten Schicht, die einem Querschnitt des mindestens einen herzustellenden Objektes entsprechen, so mittels elektromagnetischer Strahlung oder Teilchenstrahlung abgetastet werden, dass das Pulver an diesen Stellen durch die durch die Strahlung eingebrachte Wärmeenergie zumindest oberflächlich angeschmolzen wird. Der Schritt des Aufbringens einer Schicht des pulverförmigen Aufbaumaterials und der Schritt des selektiven Verfestigens der aufgetragenen Schicht werden so oft wiederholt, bis alle Querschnitte des mindestens einen herzustellenden dreidimensionalen Objekts verfestigt sind. Besteht mindestens ein Querschnitt aus einem Innenbereich und einem Oberflächenbereich des mindestens einen herzustellenden Objekts und in mindestens einem der selektiven Verfestigungsschritte wird vor Beginn der Abtastung des Innenbereichs mindestens ein Teil des Oberflächenbereichs, der - bezogen auf die Lage des mindestens einen herzustellenden Objekts während der Herstellung - Bestandteil von nach unten oder nach oben zeigenden Flächen des mindestens einen herzustellenden Objekts ist, mindestens dreimal abgetastet wird.

Überraschend wurde festgestellt, dass sich besonders glatte Oberflächen des herzustellenden Objekts erzielen lassen, wenn Oberflächenbereiche innerhalb einer Schicht vor dem in dieser Schicht zu verfestigenden Innenbereich des Objektquerschnitts mindestens zweimal bestrahlt werden. Dabei wird bevorzugt bei jedem dieser mindestens zwei Bestrahlungsvorgänge eine lokale Temperatur im Einwirkungsbereich der elektromagnetischen bzw. Teilchenstrahlung auf das Aufbaumaterial induziert, die einen lokalen Verbindungseffekt im Aufbaumaterial (etwa durch mindestens oberflächliches Schmelzen, Sintern o.ä.) bewirkt. Gleiches gilt im Folgenden, wenn von mindestens dreimaliger Bestrahlung die Rede ist.

Die Erfindung wendet sich mit dieser Vorgehensweise erstens von der einmaligen Bestrahlung der Oberflächenbereiche ab. Sie wendet sich zweitens davon ab, eine mehrmalige Bestrahlung der Oberflächenbereiche erst nach der Abtastung des Innenbereichs durchzuführen oder drittens eine einzige Bestrahlung der Oberflächenbereiche vor der Abtastung des Innenbereichs mit einer oder mehreren Bestrahlungen der Oberflächenbereiche nach Abtastung des Innenbereichs zu kombinieren. Stattdessen hat der Erfinder festgestellt, dass optimale Oberflächen ausschließlich mit der erfindungsgemäßen Vorgehensweise erzielt werden konnten (wobei eine Bestrahlung der Oberflächenbereiche nach der Abtastung des Innenbereichs prinzipiell noch möglich sind). Eine mögliche Erklärung für diesen von dem Erfinder entdeckten überraschenden Effekt könnte darin zu finden sein, dass bei dem erfinderischen Vorgehen der Innenbereich eines Objektquerschnitts, der noch nicht verfestigt wurde, kühler ist im Vergleich zum Stand der Technik, bei dem zunächst der Innenbereich eines Objektquerschnitts mittels Strahlung aufgeschmolzen wird.

Besonders vorteilhaft lassen sich die erfinderische Vorrichtung und das erfinderische Verfahren im Zusammenhang mit Herstellungsvorgängen einsetzen, bei denen als Aufbaumaterial ein Metallpulver verwendet wird. Bei metallischen Gegenständen sind Oberflächenrauigkeiten in der Regel besonders augenfällig, da die Rauigkeit der Oberfläche unmittelbar den Oberflächenglanz beeinflusst. Besonders glatte Oberflächen werden auch einen starken Glanz zeigen.

Insbesondere bei der Herstellung von Objekten mit einem Edelmetallgehalt, der mindestens 50 Gew.-% eines Edelmetalls entspricht, zeigen sich die Vorteile der Erfindung. Gerade bei Gegenständen mit einem hohen Edelmetallgehalt spielt oftmals das Aussehen des Gegenstandes eine wichtige Rolle. Die Erfindung ermöglicht hier Oberflächen mit hohem Glanz ohne zusätzliche mechanische Bearbeitungsschritte. Ist das verwendete Edelmetall Palladium, so ist z.B. Material mit einem Feingehalt von mindestens 500/1000, bevorzugt mindestens 950/1000 verwendbar. Für Platin liegen die gebräuchlichen Edelmetallgehalte bei mindestens 585/1000, mindestens 750/1000, mindestens 800/1000 bzw. mindestens 950/1000. Bei Silber liegt der Feingehalt normalerweise bei mindestens 800/1000 bzw. mindestens 925/1000. Gold hat normalerweise einen Feingehalt von mindestens 333/1000 (entsprechend 8 Karat) mit verschiedenen höheren gebräuchlichen Edelmetallgehalten von z.B. 585/1000 (14 Karat), 750/1000 (18 Karat) bis zu 999/1000 (24 Karat). Pulver mit allen genannten gebräuchlichen Edelmetallgehalten sind als Aufbaumaterial verwendbar. Darüberhinaus ist aber auch Edelmetallpulver mit abweichendem, insbesondere höherem, Feingehalt verwendbar.

Wird als Aufbaumaterial Gold verwendet, das eine Karatzahl von mindestens 14, bevorzugt mindestens 18 hat, kann die Erfindung in vorteilhafter Weise angewendet werden. Trotz der vergleichsweise niedrigen Wärmekapazität bei Gold und der hohen Wärmeleitfähigkeit konnten glänzende Oberflächen für dieses Aufbaumaterial erzielt werden.

Das erfindungsgemäße Vorgehen eignet sich nicht nur zur Herstellung von glatten Teiloberflächen, sondern kann natürlich auch zur Herstellung von Objekten eingesetzt werden, deren gesamte Seitenoberfläche glänzt, indem in jedem selektiven Verfestigungsschritt - unter möglicher Ausnahme der selektiven Verfestigungsschritte einer untersten und/oder einer obersten Schicht des Aufbaumaterials des Objekts (2) - vor Beginn der Abtastung des Innenbereichs mindestens ein Teil des Oberflächenbereichs mindestens zweimal abgetastet wird, also insbesondere der gesamte Oberflächenbereich eines Objekts vor Abtastung des Innenbereichs in jeder Schicht mindestens zweimal abgetastet wird.

Es hat sich gezeigt, dass besonders vorteilhafte Ergebnisse erzielt werden können, wenn in mindestens einem der selektiven Verfestigungsschritte vor Beginn der Abtastung des Innenbereichs mindestens ein Teil des Oberflächenbereichs so abgetastet wird, dass die Strahlung auch in einen unmittelbar außerhalb des Querschnitts an den Oberflächenbereich angrenzenden Bereich eindringt. Insbesondere wenn ein Oberflächenbereich nochmals bestrahlt wird, ist es von Vorteil, die Strahlung auch in einen unmittelbar außerhalb des Querschnitts an den Oberflächenbereich angrenzenden Bereich eindringen zu lassen.

Insbesondere für Oberflächenbereiche eines Objekts, die, bezogen auf die Lage des Objekts während seiner schichtweisen Herstellung, Bestandteil von nach unten oder nach oben zeigenden Flächen des mindestens einen herzustellenden Objektes sind und entsprechend unmittelbar oberhalb von unverfestigtem Pulver liegen oder unmittelbar von unverfestigtem Pulver bedeckt sind, ist das erfindungsgemäße Vorgehen von Vorteil. Hier wurde festgestellt, dass sich die vorteilhaften Oberflächeneigenschaften des erfindungsgemäß hergestellten Objekts besonders dann ergeben, wenn für glatte nach unten oder nach oben zeigende Flächen die entsprechenden Oberflächenbereiche am seitlichen Rand der nach unten oder nach oben zeigenden Flächen mindestens dreimal nacheinander abgetastet werden. Alternativ (oder ergänzend) kann auch vor Beginn der Abtastung des Innenbereichs mindestens zweimal und nach der Abtastung des Innenbereichs mindestens einmal abgetastet werden - der Effekt dieser zweiten Vorgehensweise ist vergleichbar mit dem der erstgenannten.

Insbesondere bei nach unten zeigenden Flächen konnte für diese beiden Vorgehensweisen eine deutliche Verbesserung der Oberflächenglattheit gegenüber dem Vorgehen des Standes der Technik beobachtet werden.

Gerade bei nach unten oder oben weisenden Flächen wird bei einem bevorzugten Vorgehen in mindestens einem der selektiven Verfestigungsschritte eines Oberflächenbereichs, bevorzugt dem mittleren der Verfestigungsschritte, mindestens ein Teil des Oberflächenbereichs so abgetastet, dass die Strahlung auch in einen unmittelbar außerhalb des Querschnitts an den Oberflächenbereich angrenzenden Bereich eindringt, und in mindestens einem anderen der selektiven Verfestigungsschritte, bevorzugt dem ersten und/oder dem letzten der Verfestigungsschritte vor Beginn der Abtastung des Innenbereichs mindestens ein Teil des Oberflächenbereichs so abgetastet wird, dass die Strahlung im Wesentlichen nicht in einen unmittelbar außerhalb des Querschnitts an den Oberflächenbereich angrenzenden Bereich eindringt.

Eine erfindungsgemäße Vorrichtung zur Herstellung mindestens eines dreidimensionalen Objekts mittels schichtweiser Verfestigung eines pulverförmigen Aufbaumaterials durch elektromagnetische Strahlung oder Teilchenstrahlung weist auf: eine Bauunterlage zum Tragen des mindestens einen herzustellenden Objektes, eine Auftragsvorrichtung zum Aufbringen einer Schicht des pulverförmigen Aufbaumaterials auf die Bauunterlage oder eine bereits zuvor aufgetragene und selektiv verfestigte Schicht des Aufbaumaterials, eine selektive Verfestigungsvorrichtung, die in der Lage ist, alle Stellen in der aufgebrachten Schicht, die einem Querschnitt des mindestens einen herzustellenden Objektes entsprechen, so mittels elektromagnetischer Strahlung oder Teilchenstrahlung abzutasten, dass das Pulver an diesen Stellen durch die durch die Strahlung eingebrachte Wärmeenergie zumindest oberflächlich angeschmolzen wird, wobei mindestens ein Querschnitt aus einem Innenbereich und einem Oberflächenbereich des mindestens einen herzustellenden Objektes besteht, und eine Steuereinheit, welche die Auftragsvorrichtung und die selektive Verfestigungsvorrichtung so steuert, dass ein Schritt des Aufbringens einer Schicht des pulverförmigen Aufbaumaterials und ein Schritt des selektiven Verfestigens der aufgetragenen Schicht so oft wiederholt werden, bis alle Querschnitte des mindestens einen herzustellenden dreidimensionalen Objekts verfestigt sind. Hierbei ist die Steuereinheit so ausgelegt, dass in mindestens einem der selektiven Verfestigungsschritte vor Beginn der Abtastung des Innenbereichs mindestens ein Teil des Oberflächenbereichs, der - bezogen auf die Lage des mindestens einen herzustellenden Objekts während der Herstellung - Bestandteil von nach unten oder nach oben zeigenden Flächen des mindestens einen herzustellenden Objekts ist, mindestens dreimal abgetastet wird.

Ein erfindungsgemäßes Computerprogramm umfasst eine Abfolge von Befehlen, mittels derer die erfindungsgemäße Vorrichtung zur Herstellung mindestens eines dreidimensionalen Objektes in die Lage versetzt wird, ein erfindungsgemäßes Verfahren durchzuführen, wenn das Computerprogramm in der Steuereinheit ausgeführt wird.

Weitere Merkmale und Zweckmäßigkeiten der Erfindung ergeben sich aus der Beschreibung eines Ausführungsbeispiels anhand der Figuren. Von den Figuren zeigen:
- Fig. 1: eine schematische Darstellung einer Lasersintervorrichtung als Beispiel einer Vorrichtung zum schichtweisen Herstellen eines dreidimensionalen Objekts, und
- Fig. 2: einen Schnitt durch einen Teilbereich eines herzustellenden Objektes senkrecht zu den Schichten zur Veranschaulichung des erfindungsgemäßen Vorgehens.

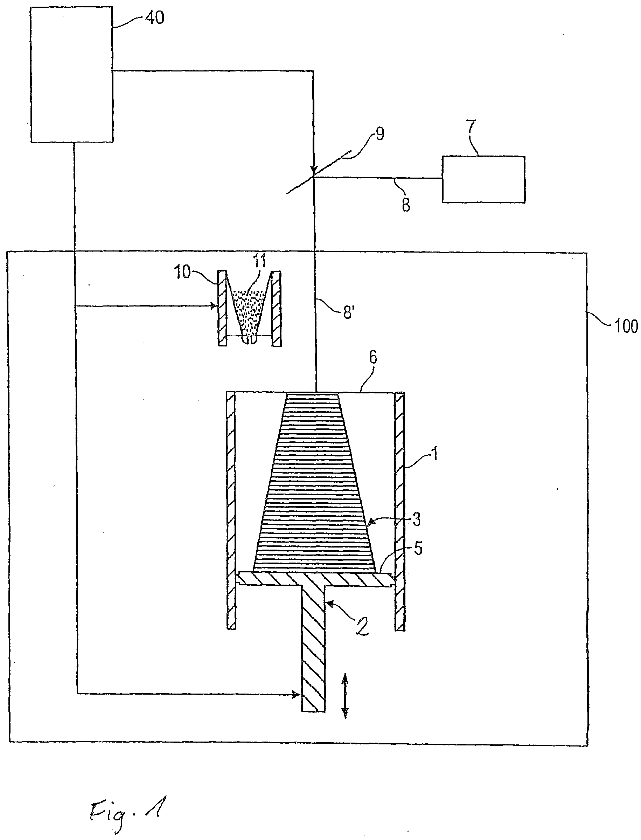

Fig. 1 zeigt in schematischer Weise eine Lasersintervorrichtung als Beispiel einer Vorrichtung zum schichtweisen Herstellen eines dreidimensionalen Objekts mittels eines generativen Fertigungsverfahrens. Die Vorrichtung, in der nach Anpassung der Steuereinrichtung 40 das erfindungsgemäße Verfahren durchgeführt werden kann, weist einen nach oben hin offenen Behälter 1 mit einem darin in vertikaler Richtung bewegbaren Träger 2 auf, der das zu bildende Objekt 3 trägt. Der Träger 2 wird in vertikaler Richtung so eingestellt, dass die jeweils zu verfestigende Schicht des Objekts in einer Arbeitsebene 6 liegt. Weiterhin ist ein Beschichter 10, 11 vorgesehen zum Aufbringen des durch elektromagnetische Strahlung zu verfestigenden pulverförmigen Aufbaumaterials. Als Quelle der elektromagnetischen Strahlung ist ein Laser 7 vorgesehen. Der durch den Laser 7 erzeugte Laserstrahl 8 wird durch eine Ablenkeinheit 9 auf die Arbeitsebene 6 in einer Prozesskammer 100 der Vorrichtung gelenkt und in einem vorbestimmten Punkt in der Arbeitsebene 6 fokussiert. Die Steuereinrichtung 40 steuert die Bestandteile der Vorrichtung in koordinierter Weise zum Durchführen des Bauprozesses. Die Steuerung wird u.a. in Abhängigkeit von CAD-Daten des herzustellenden Objekts 3 durchgeführt.

Als pulverförmiges Aufbaumaterial können alle für das Lasersinterverfahren geeigneten Pulver bzw. Pulvermischungen verwendet werden. Solche Pulver umfassen beispielsweise Kunststoffpulver wie Polyamid oder Polystyrol, PEEK, Metallpulver wie Edelstahlpulver oder andere, dem jeweiligen Zweck angepasste Metallpulver, insbesondere Legierungen, kunststoffbeschichteten Sand oder Keramikpulver.

Ein Betrieb der Lasersintervorrichtung erfolgt in der Regel so, dass der Beschichter 10, 11 über das Baufeld fährt und eine Pulverschicht mit einer vorbestimmten Dicke d, die nicht für alle Schichten gleich sein muss, im gesamten Baufeld aufbringt. Anschließend wird mit dem Laserstrahl der Querschnitt des Objekts 3 in der jeweiligen Schicht in der Arbeitsebene 6 bestrahlt, so dass das Pulver dort zumindest oberflächlich aufschmilzt, so dass das Material nach einer Abkühlung als Festkörper vorliegt, sich also verfestigt hat. Bei einem vollständigen Aufschmelzen durch die Strahlungsenergie wird auch von einem Laserschmelzverfahren gesprochen. Dann wird der Träger 2 abgesenkt und eine neue Pulverschicht aufgebracht. Die Herstellung des Objekts 3 erfolgt auf diese Weise Schicht für Schicht. Das fertige Objekt 3 wird nach Abschluss des Herstellungsvorgangs aus dem Pulverbett entfernt.

Auch wenn in Fig. 1 nur ein einzelnes Objekt 3 gezeigt ist, so ist es ohne Mehraufwand möglich gleichzeitig mehrere Objekte in dem Behälter 1 herzustellen. In solch einem Fall wird das Pulver innerhalb einer Schicht an allen Stellen durch Bestrahlung verfestigt, die einem Querschnitt eines der Objekte entsprechen.

Innerhalb eines Objektquerschnitts kann man zwischen einem Konturbereich und einem Innenbereich unterscheiden. Der Konturbereich entspricht dabei dem Randbereich (Rand im mathematischtopologischen Sinne, umfasst also auch Ränder an Ausnehmungen in dem Objektquerschnitt) des Objektes, wohingegen der Innenbereich der gesamten Querschnittsfläche abzüglich des Konturbereichs entspricht. Beim fertigen Objekt liegt der Konturbereich dann an der äußeren Oberfläche oder aber auch an der inneren Oberfläche (beim Vorhandensein von Hohlräumen bzw. Kanälen im Objekt).

Ein Oberflächenbereich im Sinne der vorliegenden Anmeldung ist ein Konturbereich, wie er eben definiert wurde. Für Flächenbereiche, die während der Herstellung unmittelbar oberhalb von unverfestigtem Pulver liegen, hat sich im Fachjargon die Bezeichnung "DownSkin"-Bereiche eingebürgert. Für Flächenbereiche, die nach ihrer Verfestigung während des weiteren Herstellungsvorgangs unmittelbar von Pulver bedeckt sind, das nicht verfestigt wird, hat sich im Fachjargon die Bezeichnung "Up-Skin"-Bereiche eingebürgert.

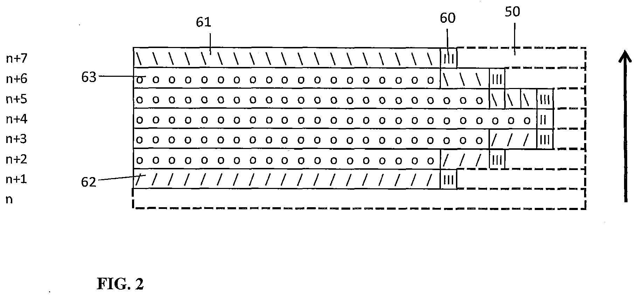

In Fig. 2 ist zusammenfassend dargestellt, was gemäß der vorliegenden Anmeldung als Oberflächenbereich angesehen wird. Die Figur zeigt einen Ausschnitt aus dem rechten Seitenbereich eines bereits fertig gestellten Teils des herzustellenden Objekts 3, wobei der Ausschnitt Teile von acht Objektquerschnitten n bis n+7 zeigt. Der am rechten Rand der Figur 2 dargestellte Pfeil zeigt die Baurichtung an, also die Reihenfolge in der die Schichten n bis n+7 nacheinander aufgetragen und selektiv verfestigt wurden.

In der Figur 2 sind alle Bereiche 50, in denen das Pulver unverfestigt bleibt, ohne Füllung und mit einer gestrichelten Linie als Umrandung dargestellt. Alle zum Oberflächenbereich 60 in einer Schicht gehörenden Stellen sind mit senkrechten Strichen gekennzeichnet, alle Stellen 61 des verfestigten Teils des Objekts, die während der Herstellung (also während der Anordnung in der Schichtbauvorrichtung, z.B. der Lasersintervorrichtung von Figur 1) nach oben zeigen und von unverfestigtem Pulver bedeckt sind ("Up-Skin"), sind mit einem nach links geneigten Schrägstrich gekennzeichnet, alle Stellen 62 des verfestigten Teils des Objekts, die während der Herstellung (also während der Anordnung in der Schichtbauvorrichtung, z.B. der Lasersintervorrichtung von Figur 1) nach unten zeigen und oberhalb von unverfestigtem Pulver liegen ("Down-Skin"), sind mit einem nach rechts geneigten Schrägstrich gekennzeichnet und alle Stellen 63, die sich im Innenbereich des zu verfestigenden Teils einer Schicht befinden, sind mit einem Kreis gekennzeichnet.

Nachfolgend wird beschrieben, wie ein erfindungsgemäßes Verfahren auf der oben beschriebenen Lasersintervorrichtung durchgeführt werden kann, wobei nur die Besonderheiten gegenüber dem herkömmlichen Vorgehen beschrieben werden:
Bei einem generativen Fertigungsverfahren, wie beispielsweise einem Lasersinterverfahren, bei dem Objekte schichtweise aus einem Baumaterial hergestellt werden, liegt zunächst ein CAD-Modell des herzustellenden Objekts vor, welches in Schichten zerlegt wird (sogenanntes slicing), die den zu verfestigenden Schichten des Aufbaumaterials entsprechen. Diese Daten (auch Produktionsdaten genannt), welche die Strukturinformation über das Objekt enthalten, werden von der Steuereinrichtung 40 für die Herstellung des Objektes verarbeitet. Bereits vor der Herstellung des Objektes ist somit bekannt, in welcher Weise sich ein Objektquerschnitt aus Innenbereich und Oberflächenbereich zusammensetzt. Insbesondere ergibt sich aus den Produktionsdaten, welche Bereiche eines Objektquerschnitts in der Schichtbauvorrichtung "DownSkin"-Bereiche bzw. "UpSkin"-Bereiche sind.

Bei der Herstellung eines Objektes auf der Grundlage der Produktionsdaten wird erfindungsgemäß in einer Schicht, in der ein Objektquerschnitt verfestigt wird, zunächst ein Oberflächenbereich mit der Laserstrahlung bestrahlt. Insbesondere wird die Energie zur Verfestigung im Oberflächenbereich mittels mindestens zweier aufeinanderfolgender Bestrahlungsvorgänge eingebracht. Dadurch wird nicht die gesamte Strahlungsleistung zur Verfestigung auf einmal eingebracht, sondern in mehreren Teilen. Dadurch sind die Temperaturänderungen weniger abrupt und es ist mehr Zeit für einen Temperaturausgleich innerhalb des aufzuschmelzenden Bereichs vorhanden.

In einem Oberflächenbereich eines UpSkin/DownSkin-Bereichs wird zur Verfestigung des Aufbaumaterials mindestens dreimal Strahlung auf das Material gerichtet zur Verfestigung desselben.

Das erfindungsgemäße Verfahren wird nachfolgend unter Bezugnahme auf Fig. 2 erläutert:
Nachdem die Schicht n+1 aufgetragen wurde, wird zunächst der Oberflächenbereich 60 mindestens zweimal hintereinander bestrahlt. Nachfolgend wird der restliche Bereich der Schicht n+1 zum Verfestigen bestrahlt. Da der in Fig. 2 gezeigte Bereich 62 der Schicht n+1 vollständig über der Schicht n aus unverfestigtem Pulver liegt, handelt es sich um einen DownSkin-Bereich. Daher wird in dieser Schicht der Oberflächenbereich 60 vor dem restlichen Bereich mindestens dreimal bestrahlt oder aber zunächst zweimal bestrahlt und nach Bestrahlung des restlichen Bereichs noch mindestens einmal bestrahlt.

Man beachte, dass der Innenbereich in der Schicht n+1 durch Schrägstriche und nicht durch Kreise gekennzeichnet ist, da es sich um einen DownSkin-Bereich handelt. Der Oberflächenbereich 60 in der Schicht n+1 ist gleichzeitig auch Bestandteil des DownSkin-Bereichs, jedoch nicht als solcher gekennzeichnet.

In der Schicht n+2 ist nur ein Teil des Innenbereichs 63 ein DownSkin-Bereich 62. Da der Oberflächenbereich 60 in dieser Schicht den DownSkin-Bereich 62 begrenzt, wird auch in dieser Schicht der Oberflächenbereich mindestens dreimal bestrahlt (so wie bei der Schicht n+1). Der restliche Downskin-Bereich in der Schicht n+2 wird zusammen mit dem Innenbereich 63 bestrahlt.

Die Schicht n+3 wird wie die Schicht n+2 behandelt.

In der Schicht n+4 gibt es keinen DownSkin-Bereich. Daher wird der Oberflächenbereich 60 in dieser Schicht vor der Bestrahlung des Innenbereichs 63 mindestens zweimal bestrahlt, wobei eine zweimalige Bestrahlung in der Regel ausreichend ist, weitere Bestrahlungen des Oberflächenbereichs 60 jedoch möglich sind. Die Mindestanzahl der Bestrahlungen ist in Figur 2 durch die Anzahl der vertikalen Linien in einem Oberflächenbereich 60 kodiert.

Die Behandlung der Schichten n+5 und n+6 unterscheidet sich nicht von der Behandlung der Schichten n+2 und n+3. Der einzige Unterschied besteht darin, dass in den Schichten n+5 und n+6 Upskin- anstelle von DownSkin-Bereichen vorhanden sind. Ebenso wird die Schicht n+7 mit dem UpSkin-Bereich genauso wie die Schicht n+1 behandelt.

Wichtig bei dem erfindungsgemäßen Vorgehen ist, dass jeder Strahleintrag beim mehrmaligen Bestrahlen eines Oberflächenbereichs das Aufbaumaterial nicht nur vorerwärmt, sondern so viel Energie einträgt, dass das Aufbaumaterial zumindest oberflächlich angeschmolzen wird.

Für 18-karätiges Goldpulver als Aufbaumaterial wurde z.B. folgendermaßen vorgegangen:
Innerhalb jedes Objektquerschnitts wurde zunächst eine Belichtung des Oberflächenbereichs mit einer Ablenkgeschwindigkeit des Laserflecks auf der Pulveroberfläche von 350 mm/s bei 80 Watt Laserleistung bei einem vorgegebenen Strahldurchmesser (dessen Abmessungen dem Fachmann in der Praxis geläufig sind) durchgeführt. Hierbei wurde der Strahl entlang des Oberflächenbereichs so entlanggeführt, dass der Laserfleck möglichst keine Stellen ausserhalb des Objektquerschnitts erfasste. Die zweite Belichtung des Oberflächenbereichs fand nachfolgend mit einer Ablenkgeschwindigkeit des Strahlflecks von 350 mm/s bei 80 Watt Laserleistung und bei demselben vorgegebenen Strahldurchmesser statt. Hierbei wurde der Strahl so geführt, dass auch ein Bereich der Breite 0,015 mm außerhalb des Objektquerschnitts (also eigentlich nicht zu verfestigendes Pulver in der Schicht) bestrahlt wurde. Schließlich wurde eine dritte Bestrahlung des Oberflächenbereichs durchgeführt, bei der die Ablenkgeschwindigkeit 400 mm/s betrug bei 80 Watt Laserleistung und bei demselben vorgegebenen Strahldurchmesser. Wie bei der erstmaligen Bestrahlung wurde auch bei der dritten Bestrahlung der Laserfleck so geführt, dass möglichst keine Stellen ausserhalb des Objektquerschnitts bestrahlt wurden. Insbesondere wurde durch die dritte Bestrahlung weniger Energie eingetragen als durch die erste und zweite Bestrahlung. Nach der Belichtung des Oberflächenbereichs in einem Objektquerschnitt erfolgte jedes Mal die Belichtung des Innenbereichs des Objektquerschnitts.

Es wurden Vergleichsversuche durchgeführt, bei denen der Oberflächenbereich entweder nur einmal belichtet wurde, der Oberflächenbereich zweimal nach dem Belichten des Innenbereichs bestrahlt wurde oder der Oberflächenbereich einmal vor und einmal nach dem Belichten des Innenbereichs bestrahlt wurde. Keiner dieser Vergleichsversuche erbrachte vergleichbar glatte Oberflächen zu dem erfinderischen Vorgehen. Stets war ein aufwändiger Poliervorgang zur Erzielung einer glänzenden Oberfläche erforderlich.

Weiterhin sind die Vorteile der Erfindung gerade an den Oberflächenbereichen von DownSkin-Bereichen besonders augenfällig.

Aufgrund der vorteilhaften Oberflächen, die sich durch das erfindungsgemäße Verfahren mit der erfindungsgemäßen Vorrichtung erzielen lassen, eignet sich das erfindungsgemäße Vorgehen insbesondere zur Herstellung von Objekten, bei denen es in besonderem Maße auf makellose Oberflächen ankommt, also insbesondere zur Herstellung von Objekten zu Schmuckzwecken bzw. Objekten aus edelmetallhaltigem Pulver. Hier ist in erster Linie an Gold, Silber, Platin, Palladium oder Kupfer oder Mischungen derselben als Edelmetallbestandteile im Pulver zu denken. Der Wert der hergestellten Objekte steigt natürlich mit dem Feingehalt der Edelmetalle.

Des Weiteren eignet sich das Verfahren insbesondere für Objekte aus Materialien, die einen starken Glanz zeigen, also insbesondere Objekten, die durch die Verfestigung von Metallpulver hergestellt wurden.

Zwar wurde das erfindungsgemäße Verfahren am Beispiel einer Lasersintervorrichtung beschrieben, jedoch lässt es sich in gleicher Weise auf alle anderen generativen Schichtbauverfahren anwenden, bei denen die Verfestigung mittels elektromagnetischer Strahlung oder mittels energetischer Teilchen (z.B. Elektronen) erfolgt. Insbesondere ist es möglich, die Bestrahlung zur Verfestigung durch Masken auf das Baumaterial zu leiten, wobei die Masken jeweils in dem zu bestrahlenden Bereich offen sind. Darüber hinaus ist auch ein Verfahren mit einer zugehörigen Vorrichtung denkbar, bei denen der Strahlfleck eine großflächigere Ausdehnung hat.

## Patentansprüche

1. Verfahren zur Herstellung mindestens eines dreidimensionalen Objekts (3) mittels schichtweiser Verfestigung eines pulverförmigen Aufbaumaterials durch elektromagnetische Strahlung oder Teilchenstrahlung mit den folgenden Schritten:
einem Schritt des Aufbringens einer Schicht des pulverförmigen Aufbaumaterials auf eine Bauunterlage (2) oder eine bereits zuvor aufgetragene und selektiv verfestigte Schicht des Aufbaumaterials,
einem Schritt des selektiven Verfestigens der aufgetragenen Schicht mittels elektromagnetischer Strahlung oder Teilchenstrahlung, bei dem alle Stellen in der aufgebrachten Schicht, die einem Querschnitt des mindestens einen herzustellenden Objektes (3) entsprechen, so mittels elektromagnetischer Strahlung oder Teilchenstrahlung abgetastet werden, dass das Pulver an diesen Stellen durch die durch die Strahlung eingebrachte Wärmeenergie zumindest oberflächlich angeschmolzen wird,
wobei mindestens ein Querschnitt einen Innenbereich (63) und einen Oberflächenbereich (60) des mindestens einen herzustellenden Objekts aufweist,
wobei der Schritt des Aufbringens einer Schicht des pulverförmigen Aufbaumaterials und der Schritt des selektiven Verfestigens der aufgetragenen Schicht so oft wiederholt werden, bis alle Querschnitte des mindestens einen herzustellenden dreidimensionalen Objekts verfestigt sind,
wobei in mindestens einem der selektiven Verfestigungsschritte vor Beginn der Abtastung des Innenbereichs (63) mindestens ein Teil des Oberflächenbereichs (60), der - bezogen auf die Lage des mindestens einen herzustellenden Objekts während der Herstellung - Bestandteil von nach unten oder nach oben zeigenden Flächen des mindestens einen herzustellenden Objekts ist, mindestens dreimal abgetastet wird.

2. Verfahren gemäß Anspruch 1, bei dem als Aufbaumaterial ein Metallpulver verwendet wird.

3. Verfahren gemäß Anspruch 2, bei dem das Aufbaumaterial einen Edelmetallanteil von mindestens 50 Gew.-% aufweist.

4. Verfahren nach Anspruch 3, bei dem als Aufbaumaterial Goldpulver verwendet wird, das eine Karatzahl von mindestens 14, bevorzugt mindestens 18 aufweist.

5. Verfahren nach einem der vorangehenden Ansprüche, bei dem in jedem selektiven Verfestigungsschritt - unter möglicher Ausnahme der selektiven Verfestigungsschritte einer untersten und/oder einer obersten Schicht des Aufbaumaterials des Objekts (2) - vor Beginn der Abtastung des Innenbereichs (63) mindestens ein Teil des Oberflächenbereichs (60) mindestens zweimal abgetastet wird.

6. Verfahren nach einem der vorangehenden Ansprüche, bei dem vor Beginn der Abtastung des Innenbereichs (63) der gesamte Oberflächenbereich (60) mindestens eines Querschnitts mindestens zweimal abgetastet wird.

7. Verfahren gemäß einem der vorangehenden Ansprüche, bei dem in mindestens einem der selektiven Verfestigungsschritte vor Beginn der Abtastung des Innenbereichs (63) mindestens ein Teil des Oberflächenbereichs (60) so abgetastet wird, dass die Strahlung auch in einen unmittelbar außerhalb des Querschnitts an den Oberflächenbereich (60) angrenzenden Bereich eindringt.

8. Verfahren nach einem der Ansprüche 1 bis 7, bei dem Oberflächenbereiche (60), die, bezogen auf die Lage des mindestens einen herzustellenden Objekts während der Herstellung, Bestandteil von nach unten zeigenden Flächen des mindestens einen herzustellenden Objekts sind, vor Beginn der Abtastung des Innenbereichs (63) mindestens dreimal abgetastet werden.

9. Verfahren gemäß einem der vorangehenden Ansprüche, bei dem Oberflächenbereiche (60), die, bezogen auf die Lage des mindestens einen herzustellenden Objekts während der Herstellung, Bestandteil von nach unten oder nach oben zeigenden Flächen des mindestens einen herzustellenden Objekts sind, vor Beginn der Abtastung des Innenbereichs (63) mindestens zweimal und nach der Abtastung des Innenbereichs (63) mindestens einmal abgetastet werden.

10. Verfahren nach Anspruch 9, bei dem Oberflächenbereiche (60), die, bezogen auf die Lage des mindestens einen herzustellenden Objekts während der Herstellung, Bestandteil von nach unten zeigenden Flächen des mindestens einen herzustellenden Objekts sind, vor Beginn der Abtastung des Innenbereichs (63) mindestens zweimal und nach der Abtastung des Innenbereichs (63) mindestens einmal abgetastet werden.

11. Verfahren nach einem der Ansprüche 1 bis 10, bei dem in mindestens einem der selektiven Verfestigungsschritte, bevorzugt einem mittleren der Verfestigungsschritte, vor Beginn der Abtastung des Innenbereichs (63) mindestens ein Teil des Oberflächenbereichs (60) so abgetastet wird, dass die Strahlung auch in einen unmittelbar außerhalb des Querschnitts an den Oberflächenbereich (60) angrenzenden Bereich eindringt und bei dem in mindestens einem der selektiven Verfestigungsschritte, bevorzugt dem ersten und/oder dem letzten der Verfestigungsschritte, vor Beginn der Abtastung des Innenbereichs (63) mindestens ein Teil des Oberflächenbereichs (60) so abgetastet wird, dass die Strahlung im Wesentlichen nicht in einen unmittelbar außerhalb des Querschnitts an den Oberflächenbereich (60) angrenzenden Bereich eindringt.

12. Vorrichtung zur Herstellung mindestens eines dreidimensionalen Objekts (3) mittels schichtweiser Verfestigung eines pulverförmigen Aufbaumaterials durch elektromagnetische Strahlung oder Teilchenstrahlung mit
einer Bauunterlage (2) zum Tragen des mindestens einen herzustellenden Objektes (3),
einer Auftragsvorrichtung (10, 11) zum Aufbringen einer Schicht des pulverförmigen Aufbaumaterials auf die Bauunterlage (2) oder eine bereits zuvor aufgetragene und selektiv verfestigte Schicht des Aufbaumaterials,
einer selektiven Verfestigungsvorrichtung (7, 9), die in der Lage ist, alle Stellen in der aufgebrachten Schicht, die einem Querschnitt des mindestens einen herzustellenden Objektes entsprechen, so mittels elektromagnetischer Strahlung oder Teilchenstrahlung abzutasten, dass das Pulver an diesen Stellen durch die durch die Strahlung eingebrachte Wärmeenergie zumindest oberflächlich angeschmolzen wird, wobei mindestens ein Querschnitt aus einem Innenbereich (63) und einem Oberflächenbereich (60) des mindestens einen herzustellenden Objekts (3) besteht, und
einer Steuereinheit (40), welche die Auftragsvorrichtung (10, 11) und die selektive Verfestigungsvorrichtung (7, 9) so steuert, dass ein Schritt des Aufbringens einer Schicht des pulverförmigen Aufbaumaterials und ein Schritt des selektiven Verfestigens der aufgetragenen Schicht abwechselnd so oft wiederholt werden, bis alle Querschnitte des mindestens einen herzustellenden dreidimensionalen Objekts (3) verfestigt sind, **dadurch gekennzeichnet, dass**
die Steuereinheit (40) so ausgelegt ist, dass in mindestens einem der selektiven Verfestigungsschritte vor Beginn der Abtastung des Innenbereichs (63) mindestens ein Teil des Oberflächenbereichs (60), der - bezogen auf die Lage des mindestens einen herzustellenden Objekts während der Herstellung - Bestandteil von nach unten oder nach oben zeigenden Flächen des mindestens einen herzustellenden Objekts ist, mindestens dreimal abgetastet wird.

13. Computerprogramm, das eine Abfolge von Befehlen umfasst, mittels derer die Vorrichtung zur Herstellung mindestens eines dreidimensionalen Objekts gemäß Anspruch 12 in die Lage versetzt wird, ein Verfahren nach einem der Ansprüche 1 bis 11 durchzuführen, wenn das Computerprogramm in der Steuereinheit ausgeführt wird.

## Claims

1. A method for the production of at least one three-dimensional object (3) by layer-wise solidifying a building material in powder form by means of electromagnetic radiation or particle radiation comprising the following steps:
a step of applying a layer of the building material in powder form on a building support (2) or an already previously applied and selectively solidified layer of the building material,
a step of selectively solidifying the applied layer by means of electromagnetic radiation or particle radiation, wherein all positions in the applied layer that correspond to a cross-section of the at least one object (3) to be produced are scanned by electromagnetic radiation or particle radiation such that at these positions the powder is melted at least at its surface by the thermal energy introduced by the radiation,
wherein at least one cross-section comprises an inner region (63) and a surface region (60) of the at least one object to be produced,
wherein the step of applying a layer of the building material in powder form and the step of selectively solidifying the applied layer are repeated until all cross-sections of the at least one three-dimensional object to be produced are solidified,
wherein in at least one of the selective solidification steps at least a portion of the surface region (60) which, in terms of the position of the at least one object to be produced during its production, forms part of downwardly or upwardly facing regions of the at least one object to be produced, is scanned at least three times before scanning of the inner region (63) starts.

2. The method according to claim 1, wherein a metal powder is used as building material.

3. The method according to claim 2, wherein the building material has a noble metal content of at least 50 wt-%.

4. The method according to claim 3, wherein gold powder having a carat number of at least 14, preferably at least 18, is used as building material.

5. The method according to one of the preceding claims, wherein in each selective solidification step - with the possible exception of the selective solidification steps of a lowermost and/or an uppermost layer of the building material of the object (3) - at least a portion of the surface region (60) is scanned at least twice before scanning of the inner region (63) starts.

6. The method according to one of the preceding claims, wherein the entire surface region (60) of at least one cross-section is scanned at least twice before scanning of the inner region (63) starts.

7. The method according to one of the preceding claims, wherein in at least one of the selective solidification steps before scanning of the inner region (63) starts at least a portion of the surface region (60) is scanned in such a way that the radiation also penetrates a region which is outside the cross-section and directly adjoins the surface region (60).

8. The method according to one of claims 1 to 7, wherein surface regions (60) which, in terms of the position of the at least one object to be produced during its production, form a part of downwardly facing regions of the at least one object to be produced are scanned at least three times before scanning of the inner region (63) starts.

9. The method according to one of the preceding claims, wherein surface regions (60) which, in terms of the position of the at least one object to be produced during its production, form a part of downwardly or upwardly facing regions of the at least one object to be produced are scanned at least twice before scanning of the inner region (63) starts and at least once after scanning of the inner region (63).

10. The method according to claim 9, wherein surface regions (60) which, in terms of the position of the at least one object to be produced during its production, form a part of downwardly facing regions of the at least one object to be produced are scanned at least twice before scanning of the inner region (63) starts and at least once after scanning of the inner region (63).

11. The method according to one of claims 1 to 10, wherein in at least one of the selective solidification steps, preferably in a middle one of the solidification steps, before scanning of the inner region (63) starts at least a portion of the surface region (60) is scanned in such a way that the radiation also penetrates a region which is outside the cross-section and directly adjoins the surface region (60) and wherein in at least one of the selective solidification steps, preferably the first and/or last one of the solidification steps, before scanning of the inner region (63) starts at least a portion of the surface region (60) is scanned in such a way that the radiation substantially does not penetrate a region which is outside the cross-section and directly adjoins the surface region (60).

12. A device for producing at least one three-dimensional object (3) by layer-wise solidifying a building material in powder form by means of electromagnetic radiation or particle radiation comprises:
a building support (2) for carrying the at least one object (3) to be produced,
an application device (10, 11) for applying a layer of the building material in powder form on the building support (2) or an already previously applied and selectively solidified layer of the building material,
a selective solidification device (7, 9) which is configured to scan all positions in the applied layer that correspond to a cross-section of the at least one object to be produced by means of electromagnetic radiation or particle radiation such that at these positions the powder is melted at least at its surface by the thermal energy introduced by the radiation, wherein at least one cross-section comprises an inner region (63) and a surface region (60) of the at least one object (3) to be produced, and
a control unit (40) which controls the application device (10, 11) and the selective solidification device (7, 9) in such a way that a step of applying a layer of the building material in powder form and a step of selectively solidifying the applied layer are repeated alternatingly until all cross-sections of the at least one three-dimensional object (3) to be produced are solidified, **characterized in that**
the control unit (40) is configured so that in at least one of the selective solidification steps at least a portion of the surface region (60) which, in terms of the position of the at least one object to be produced during its production, forms part of downwardly or upwardly facing regions of the at least one object to be produced, is scanned at least three times before scanning of the inner region (63) starts.

13. A computer program which comprises a sequence of instructions that enable the device for production of at least one three-dimensional object according to claim 12 to carry out a method according to one of claims 1 to 11 when the computer program is executed by the control unit.

## Revendications

1. Procédé de fabrication d'au moins un objet tridimensionnel (3) par solidification couche par couche d'un matériau de construction pulvérulent par rayonnement électromagnétique ou rayonnement particulaire, comprenant les étapes suivantes :
une étape d'application d'une couche du matériau de construction pulvérulent sur un support de construction (2) ou une couche du matériau de construction déjà appliquée et solidifiée de manière sélective auparavant,
une étape de solidification sélective de la couche appliquée par rayonnement électromagnétique ou rayonnement particulaire, dans laquelle tous les emplacements dans la couche appliquée, qui correspondent à une section transversale de l'au moins un objet à fabriquer (3), sont balayés par rayonnement électromagnétique ou rayonnement particulaire de telle sorte que la poudre est fondue au moins en surface à ces emplacements par l'énergie thermique introduite par le rayonnement,
au moins une section transversale présentant une région intérieure (63) et une région de surface (60) de l'au moins un objet à fabriquer,
l'étape d'application d'une couche du matériau de construction pulvérulent et l'étape de solidification sélective de la couche appliquée étant répétées jusqu'à ce que toutes les sections transversales de l'au moins un objet tridimensionnel à fabriquer soient solidifiées,
au moins une partie de la région de surface (60), qui - par rapport à la position de l'au moins un objet à fabriquer pendant la fabrication - fait partie de surfaces tournées vers le bas ou vers le haut de l'au moins un objet à fabriquer, étant balayée au moins trois fois dans au moins une des étapes de solidification sélective avant le début du balayage de la région intérieure (63).

2. Procédé selon la revendication 1, dans lequel une poudre métallique est utilisée en tant que matériau de construction.

3. Procédé selon la revendication 2, dans lequel le matériau de construction présente une proportion de métal noble d'au moins 50 % en poids.

4. Procédé selon la revendication 3, dans lequel une poudre d'or est utilisée en tant que matériau de construction, laquelle présente un indice de carate d'au moins 14, de préférence d'au moins 18.

5. Procédé selon l'une quelconque des revendications précédentes, dans lequel au moins une partie de la région de surface (60) est balayée au moins deux fois dans chaque étape de solidification sélective - à l'exception possible des étapes de solidification sélective d'une couche plus inférieure et/ou d'une couche plus supérieure du matériau de construction de l'objet (2) - avant le début du balayage de la région intérieure (63).

6. Procédé selon l'une quelconque des revendications précédentes, dans lequel toute la région de surface (60) d'au moins une section transversale est balayée au moins deux fois avant le début du balayage de la région intérieure (63).

7. Procédé selon l'une quelconque des revendications précédentes, dans lequel au moins une partie de la région de surface (60) est balayée dans au moins une des étapes de solidification sélective avant le début du balayage de la région intérieure (63) de telle sorte que le rayonnement pénètre également dans une région directement adjacente à la région de surface (60) à l'extérieur de la section transversale.

8. Procédé selon l'une quelconque des revendications 1 à 7, dans lequel des régions de surface (60), qui, par rapport à la position de l'au moins un objet à fabriquer pendant la fabrication, font partie de surfaces tournées vers le bas de l'au moins un objet à fabriquer, sont balayées au moins trois fois avant le début du balayage de la région intérieure (63).

9. Procédé selon l'une quelconque des revendications précédentes, dans lequel des régions de surface (60), qui, par rapport à la position de l'au moins un objet à fabriquer pendant la fabrication, font partie de surfaces tournées vers le bas ou vers le haut de l'au moins un objet à fabriquer, sont balayées au moins deux fois avant le début du balayage de la région intérieure (63) et au moins une fois après le balayage de la région intérieure (63).

10. Procédé selon la revendication 9, dans lequel des régions de surface (60), qui, par rapport à la position de l'au moins un objet à fabriquer pendant la fabrication, font partie de surfaces tournées vers le bas de l'au moins un objet à fabriquer, sont balayées au moins deux fois avant le début du balayage de la région intérieure (63) et au moins une fois après le balayage de la région intérieure (63).

11. Procédé selon l'une quelconque des revendications 1 à 10, dans lequel au moins une partie de la région de surface (60) est balayée dans au moins une des étapes de solidification sélective, de préférence une étape intermédiaire des étapes de solidification, avant le début du balayage de la région intérieure (63) de telle sorte que le rayonnement pénètre également dans une région directement adjacente à la région de surface (60) à l'extérieur de la section transversale et dans lequel au moins une partie de la région de surface (60) est balayée dans au moins une des étapes de solidification sélective, de préférence la première et/ou la dernière des étapes de solidification, avant le début du balayage de la région intérieure (63) de telle sorte que le rayonnement ne pénètre sensiblement pas dans une région directement adjacente à la région de surface (60) à l'extérieur de la section transversale.

12. Dispositif de fabrication d'au moins un objet tridimensionnel (3) par solidification couche par couche d'un matériau de construction pulvérulent par rayonnement électromagnétique ou rayonnement particulaire, comprenant
un support de construction (2) pour supporter l'au moins un objet à fabriquer (3),
un dispositif d'application (10, 11) pour appliquer une couche du matériau de construction pulvérulent sur le support de construction (2) ou une couche du matériau de construction déjà appliquée et solidifiée de manière sélective auparavant ,
un dispositif de solidification sélective (7, 9) qui est capable de balayer tous les emplacements dans la couche appliquée, qui correspondent à une section transversale de l'au moins un objet à fabriquer, par rayonnement électromagnétique ou rayonnement particulaire de telle sorte que la poudre est fondue au moins en surface à ces emplacements par l'énergie thermique introduite par le rayonnement, au moins une section transversale se composant d'une région intérieure (63) et d'une région de surface (60) de l'au moins un objet à fabriquer (3), et
une unité de commande (40) qui commande le dispositif d'application (10, 11) et le dispositif de solidification sélective (7, 9) de telle sorte qu'une étape d'application d'une couche du matériau de construction pulvérulent et une étape de solidification sélective de la couche appliquée soient répétées en alternance jusqu'à ce que toutes les sections transversales de l'au moins un objet tridimensionnel à fabriquer (3) soient solidifiées,
**caractérisé en ce que**
l'unité de commande (40) est conçue de telle sorte qu'au moins une partie de la région de surface (60), qui - par rapport à la position de l'au moins un objet à fabriquer pendant la fabrication - fait partie de surfaces tournées vers le bas ou vers le haut de l'au moins un objet à fabriquer, soit balayée au moins trois fois dans au moins une des étapes de solidification sélective avant le début du balayage de la région intérieure (63).

13. Programme informatique qui comprend une séquence d'instructions au moyen desquelles le dispositif de fabrication d'au moins un objet tridimensionnel selon la revendication 12 est mis en mesure de mettre en œuvre un procédé selon l'une quelconque des revendications 1 à 11 lorsque le programme informatique est exécuté dans l'unité de commande.
